# EUROPEAN PATENT SPECIFICATION

(11) **EP 2 704 406 B1**
(45) Date of publication and mention of the grant of the patent: **28.11.2018**
(21) Application number: 13180156.5
(22) Date of filing: 13.08.2013
(51) Int. Cl.: H04M 1/673

(54) **Temporarily unlocking of a mobile terminal**
Temporäres Entriegeln eines Mobilterminals
Déverrouillage temporaire d'un terminal mobile

(30) Priority: 27.08.2012 KR 20120093924
(43) Date of publication of application: 05.03.2014
(73) Proprietor: Samsung Electronics Co., Ltd., Suwon-si, Gyeonggi-do, 443-742 (KR)
(72) Inventor: Choi, Youngkeun, 443-742 Gyeonggi-do (KR)
(74) Representative: HGF Limited

(56) References cited:
- EP-A2- 1 793 572
- JP-A- H11 355 432
- US-A1- 2007 167 196

## Description

### TECHNICAL FIELD

The present application relates to a lock function for a mobile terminal and, more particularly, to a mobile terminal and lock function operation method for the same that support extended user operability.

### BACKGROUND

Mobile terminals supporting communication have entered into widespread use due to small sizes thereof enabling ease of portability. Factors such as increased touchscreen sizes, advanced hardware and software support and diversification of digital content have dramatically accelerated popularization of mobile terminals.

A mobile terminal may use a touch panel as an input device. When a touch event is generated by the touch panel, the mobile terminal performs a user function corresponding to the touch event. The touch panel cannot determine whether generation of a touch event is intended by the user or not. That is, a touch event that is not intended by the user may be generated according to placement of the mobile terminal or surroundings thereof. To address this problem, the mobile terminal supports a lock function so as to prevent unintended activation of the touch panel or user function. A lock screen is a representative example of such a lock function. The lock screen may correspond to a protective layer that prevents unintended activation of a menu icon, widget icon or user function presented on the touchscreen.

An existing lock screen feature provides a lock screen and an unlock function for unlocking the lock screen with a valid unlock key. Such a lock screen feature tends to lock the mobile terminal in a rigid manner without regard to user intention, and the user is inconvenienced by having to repeatedly enter the unlock key. The user may not use a lock function to avoid such inconvenience. However, as not using a lock function may pose a security risk, the user may have to use such a lock function while enduring inconvenience.

JP-H11-355432-A describes a dial lock release method for mobile communication terminal equipment. A registered password at dial lock setting is entered, and a release method desired to be executed is selected by a selection key of 'release' or 'temporal release'. When the password is coincident, either the 'release' or the 'temporal release' is executed according to the type of selection key.

US-2007/0167196-A1 describes a method for controlling a mobile communication device. An openable/closable mobile phone has a function of locking external keys disposed on an external surface of the main body of the mobile phone. When a judging unit detects a side key provided on the main body being held down, a temporary cancellation unit instructs a lock unit to temporarily cancel the external key operation disablement setting, and instructs a resumption unit to initiate a timer. When a given time period elapses, the resumption unit instructs the lock unit to terminate the temporary cancellation.

### SUMMARY

The present disclosure provides a mobile terminal and method for operation of a lock function wherein the lock function can be executed adaptively according to user intention in such a way as to extend user operability.

In accordance with certain embodiments of the present disclosure, there is provided a method for operation of a lock function in a mobile terminal, including: receiving an input event in a locked state; and performing an unlock operation by deactivating the lock function and applying tentative lock deactivation for a given time, according to the received input event; wherein the received input event comprises an indication of the given time in which tentative lock deactivation is applied; and wherein the given time in which tentative lock deactivation is applied is specified by a user when generating the input event in the locked state.

In accordance with certain embodiments of the present disclosure, there is provided a mobile terminal supporting operation of a lock function, including: an input device configured to generate an input event in response to receiving a user input; and a control unit configured to control an operation to deactivate the lock function and apply tentative lock deactivation for a given time according to a received input event; wherein the input event comprises an indication of the given time in which tentative lock deactivation is applied; and wherein a user specifies the given time in which tentative lock deactivation is applied when generating the input event.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The features and advantages of the present disclosure will be more apparent from the following detailed description in conjunction with the accompanying drawings, in which:
FIG. 1 illustrates a block diagram of a mobile terminal supporting lock function operation according to embodiments of the present disclosure;
FIG. 2 illustrates a configuration of a control unit in the mobile terminal of FIG. 1;
FIG. 3 illustrates a flowchart of a lock function operation method according to embodiments of the present disclosure;
FIG. 4 illustrates a flowchart of a lock function operation method according to embodiments of the present disclosure;
FIG. 5 illustrates screen representations for a first example of lock function operation according to embodiments of the present disclosure;
FIG. 6 illustrates screen representations for a second example of lock function operation according to embodiments of the present disclosure;
FIG. 7 illustrates screen representations for a third example of lock function operation according to embodiments of the present disclosure; and
FIG. 8 illustrates screen representations for a fourth example of lock function operation according to embodiments of the present disclosure.

### DETAILED DESCRIPTION OF EXEMPLARY EMBODIMENTS

Hereinafter, embodiments of the present disclosure are described in detail with reference to the accompanying drawings. Detailed descriptions of well-known functions and structures incorporated herein may be omitted to avoid obscuring the subject matter of the present disclosure. Detailed descriptions of components having substantially the same configurations and functions may also be omitted. In the drawings, some elements are exaggerated, omitted or only outlined in brief, and thus may be not drawn to scale. Hence, the present disclosure is not limited by relative sizes of objects and intervals between objects in the drawings.

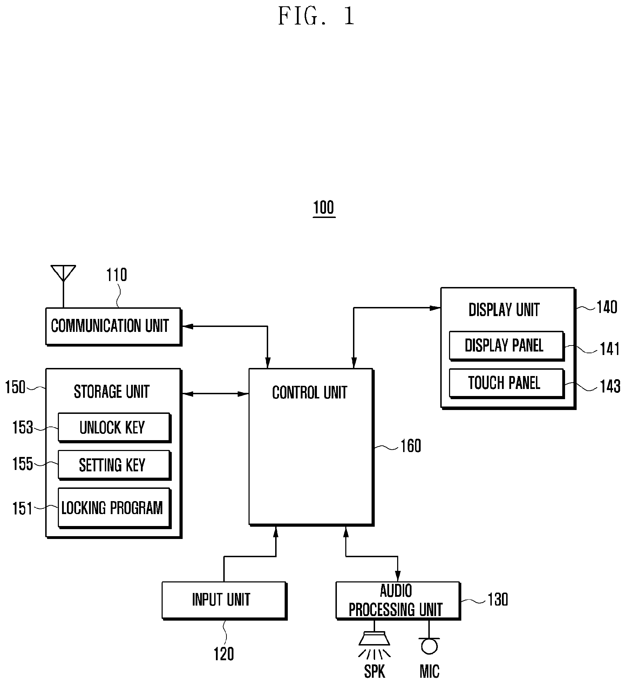

FIG. 1 illustrates a block diagram of a mobile terminal 100 supporting lock function operation according to embodiments of the present disclosure.

Referring to FIG. 1, the mobile terminal 100 may include a communication unit 110, an input unit 120, an audio processing unit 130, a display unit 140, a storage unit 150, and a control unit 160. Here, the input unit 120 and the display unit 140 may act as an input device for the mobile terminal 100.

The mobile terminal 100 having the above configuration provides a lock function, activation which may be delayed according to user lock and unlock settings. Hence, the user is not inconvenienced by unexpected or unintended locking of the mobile terminal 100 during use. As activation of the lock function is delayed for a preset time when the risk of unlocking is low, security of the mobile terminal 100 is not compromised. This tentative lock deactivation is adjustable by the user, increasing usability of the mobile terminal 100.

The communication unit 110 supports communication functions of the mobile terminal 100, and may establish a communication channel to another mobile terminal or to a web server providing specific services through a communication network. When the mobile terminal 100 does not support communication, the communication unit 110 may be omitted. The communication unit 110 may include a mobile communication module to support mobile communication. The communication unit 110 may establish a communication channel for a voice call, a data call and a video call to a mobile communication system, and send and receive call signals through the communication channel. As call or message related functions supported by the communication unit 110 have priority over the lock function, they may be executed while the lock function is activated. For example, although the lock function is activated, a call connection request or a message may be received by the communication unit 110 and a notification may be output.

The input unit 120 may generate various input signals needed for operation of the mobile terminal 100. The input unit 120 may be composed of various input device such as a keyboard, keypad, and key button. The input unit 120 generating input signals may also be composed of a touch panel 143 and a touch map output on a display panel 141. The input unit 120 may generate an input signal for activating the lock function and an input signal for deactivating the lock function. The input unit 120 may generate an input signal for setting a tentative deactivation time according to user control.

The audio processing unit 130 may output various audio data generated in the course of using the mobile terminal 100, output audio data generated by playback of audio files stored in the storage unit 150, output audio data received from the outside, and collect audio data. To this end, the audio processing unit 130 may include a speaker SPK and a microphone MIC. In particular, the audio processing unit 130 outputs various sound effects in relation to usage of the lock function of the present disclosure. For example, the audio processing unit 130 may output a sound effect when lock settings are configured, the lock function is activated, or the lock function is deactivated. When a tentative lock deactivation time has been set or is set during an unlock process, the audio processing unit 130 may output a sound notification indicating the tentative lock deactivation time. Output of a sound effect or sound notification may be skipped according to user settings.

The display unit 140 outputs various screens related to usage of the mobile terminal 100, such as an idle screen and a menu screen. The display unit 140 may include a display panel 141 and a touch panel 143. The touch panel 143 may be implemented using capacitance-based technology and generate a touch event corresponding to a change in capacitance caused by an object such as a finger. The touch panel 143 may also be implemented using electromagnetic induction technology and generate a touch event corresponding to a change in inductance caused by an object such as a touch pen. The display panel 141 may output various screens related to usage and user functions of the mobile terminal 100.

In particular, the display panel 141 may output various screens related to application of the lock function. For example, the display panel 141 may output a pattern screen having a variety of patterns constituting the lock screen and output a PIN entry screen. The user may enter an unlock key using the pattern screen or the PIN entry screen. Here, the user may enter a preset unlock pattern or a preset unlock code on the lock screen. The user may also generate a preset input signal. The user may generate one or more of an input signal for unlocking and an input signal for tentative lock deactivation through the display unit 140 acting as an input device.

The storage unit 150 may store an operating system for operation of the mobile terminal 100 and store data, application programs and algorithms for realizing user functions. In particular, the storage unit 150 may store a locking program 151 supporting the lock function of the present disclosure, an unlock key 153 for unlocking, and a setting key 155 for tentative lock deactivation.

The locking program 151 may include a variety of routines to support the lock function of the present disclosure. For example, the locking program 151 may include a routine for checking lock activation conditions, a routine for activating the lock function when a lock activation condition is satisfied, a routine for outputting a lock screen in response to an input event, and a routine for deactivating the lock function in response to a preset event. In particular, the locking program 151 may include a routine for deactivating the lock function in response to a preset input event and tentatively deactivating the lock function for a preset time, and a routine for deactivating the lock function in response to a preset input event and tentatively deactivating the lock function for a time indicated by the input event. The locking program 151 may include a routine for deactivating the lock function and a routine for deactivating the lock function and tentatively deactivating the lock function for a preset time, according to input event type.

The unlock key 153 is information for unlocking. The unlock key 153 may be one or more of a PIN code and a pattern, which are set by the user in advance to deactivate the lock function. When the lock function is disabled, the unlock key 153 may be removed from the storage unit 150. The unlock key 153 may be changed to a different pattern or number according to user control.

The setting key 155 may be information for tentatively deactivating the lock function. For example, the setting key 155 may specify a tentative deactivation time. In this case, the user may adjust the time to deactivate the lock function by changing the setting key 155. The setting key 155 may serve as an unlock key for tentatively deactivating the lock function. In this case, the setting key 155 may be a pattern or PIN code identical to or different from the unlock key 153. The user may deactivate the lock function by generating an input event corresponding to the unlock key 153, and may tentatively deactivate the lock function by generating an input event corresponding to the setting key 155. The setting key 155 may serve as a variable key for setting a tentative deactivation time. In particular, the setting key 155 may correspond to a preset input event generated after entry of the unlock key 153. Here, the tentative deactivation time for the lock function may be changed according to such an input event.

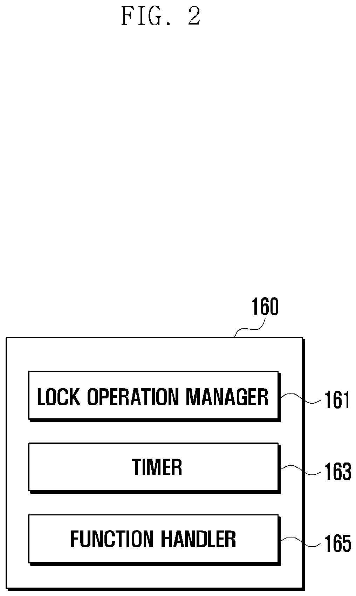

The control unit 160 is configured to control signal flow and information collection and output operations necessary for realizing the lock function of the present disclosure. To this end, the control unit 160 may have a configuration as shown in FIG. 2.

FIG. 2 illustrates a configuration of the control unit 160 in the mobile terminal 100.

Referring to FIG. 2, the control unit 160 may include a lock operation manager 161, a timer 163, and a function handler 165.

The lock operation manager 161 supports activation and deactivation of the lock function of the present disclosure. In particular, the lock operation manager 161 may tentatively deactivate the lock function according to the setting key 155, so that the mobile terminal 100 may be normally used. Specifically, the lock operation manager 161 may configure settings so that the lock function is activated according to preset locking conditions. Here, the locking conditions may include initial input after the mobile terminal 100 is powered on, no input for a preset time or more, and generation of an input signal requesting lock activation. When at least one locking condition is satisfied, the lock operation manager 161 may force the mobile terminal 100 to transition to the locked state. Thereafter, when an input event for unlocking is generated from the input unit 120, the lock operation manager 161 may control the display unit 140 to display a preset lock screen. Here, the lock screen is a screen selected by the user or provided by default for unlocking. The lock screen may take different forms according to user-defined attributes of the lock function. For example, when the user has selected a pattern for locking and unlocking operation, the lock screen may provide a means to enter a specific pattern. When the user has selected a PIN code for locking and unlocking operation, the lock screen may provide a means to enter a specific PIN code.

When an input event is received from the display unit 140 or input unit 120 after output of the lock screen, the lock operation manager 161 may check whether the received input event corresponds to the unlock key 153. To this end, the lock operation manager 161 may compare the received input event with the unlock key 153 stored in the storage unit 150. When the received input event matches the unlock key 153, the lock operation manager 161 may deactivate the lock function, remove the lock screen from the display unit 140, and control the display unit 140 to output a preset screen such as a menu screen according to scheduling information or output a user application screen having been active immediately before activation of the lock function.

On the other hand, when an input event matches the setting key 155, the lock operation manager 161 may tentatively deactivate the lock function. Here, tentative deactivation may be realized in various ways according to design of the setting key 155. For example, when the setting key 155 is preset information for tentative lock deactivation, the lock operation manager 161 may control the display unit 140 to output a pattern entry screen or PIN entry screen for unlocking. When a received input event matches the setting key 155, the lock operation manager 161 may apply tentative lock deactivation. In this process, the lock operation manager 161 starts the timer 163 and tentatively deactivates the lock function until the timer 163 expires. Upon expiration of the timer 163, the lock operation manager 161 may cancel tentative lock deactivation and activate the lock function according to preset conditions.

When the setting key 155 is set so as to apply tentative lock deactivation for a time indicated by an input event, the lock operation manager 161 may apply tentative lock deactivation for a time indicated by an input signal generated from the input unit 120 or display unit 140. Here, the lock operation manager 161 may adjust the tentative deactivation time according to a received input event. That is, the lock operation manager 161 may change the time value of the timer 163 according to an input event.

The lock operation manager 161 may use the unlock key 153 and the setting key 155 in sequence for operation control. That is, when an input event for unlocking is generated during activation of the lock function, the lock operation manager 161 may use the input event to perform unlocking operation and use the next input event to set a tentative lock deactivation time. For example, to unlock using a pattern, the user may perform a sequence of drag gestures to enter a specific pattern and perform another drag gesture. Then, the lock operation manager 161 may deactivate the lock function and remove the lock screen from the display unit 140 according to the result of matching of the drag gestures with the unlock key 153 and apply tentative lock deactivation for a time indicated by the next drag gesture. To this end, the lock operation manager 161 may track a touch event such as drag in real time and assign a time value to a particular touch event in advance.

In addition, the lock operation manager 161 may support power saving mode operation. For example, when no input event is generated for a preset time, the lock operation manager 161 may force the mobile terminal 100 to enter a dimming mode, during which supply of power to the display unit 140 is minimized. When no input event is generated for a preset time in the dimming mode, the lock operation manager 161 may force the mobile terminal 100 to enter a turn-off mode, during which supply of power to the display unit 140 is blocked. Here, unlike a related art technique, while tentative lock deactivation is being applied, the lock operation manager 161 may sustain the lock function in a deactivated state even when the display unit 140 is turned off. When an input signal for use of the mobile terminal 100 is generated within the tentative lock deactivation time, the lock operation manager 161 may resume supply of power to the display unit 140 without output of the lock screen.

The timer 163 is started for tentative lock deactivation under control of the lock operation manager 161. When the time set by default or an input event expires, the timer 163 stops and may send an expiration event to the lock operation manager 161. The time value of the timer 163 may be pre-specified by the user for tentative lock deactivation. For example, the user may set the time value to one hour, two hours, or three hours. The user may set the time value to one hour, one hour and thirty minutes, one hour and forty-five minutes or the like through input of the setting key 155. The timer 163 may be forcibly stopped according to user request and tentative lock deactivation may be cancelled accordingly. The time value of the timer 163 may be increased according to user request. After the time of the timer 163 is set to one hour, when the timer 163 has 10 minutes left after running 50 minutes, the user may generate an input event to reset the time of the timer 163 to one hour or to add 30 minutes to the remaining time.

The function handler 165 is configured to execute a user function supported by the mobile terminal 100 according to user manipulation, preset scheduling information or external input and output data produced by the user function. When the lock function is activated, the function handler 165 may control an operation to temporarily suspend or continue execution of an activated user function according to the type of the user function. For example, the function handler 165 may place the call handling function in a ready state even when the lock function is activated, activate the call handling function to generate a ringtone when a call connection request is received from the outside, and control an operation to establish a call connection during lock activation when an input signal accepting the call connection request is entered. When the call handling function is executed to place a call, the function handler 165 may deactivate the lock function. When the lock function is activated in a state in which a web connection is established through the communication unit 110, the function handler 165 may discontinue the web connection to release allocated radio resources. That is, the function handler 165 may control the communication unit 110 to release the web connection. Thereafter, when an input signal for unlocking is generated, the function handler 165 may re-establish a connection to the previous website on the basis of web log information.

As described above, application of tentative lock deactivation may deactivate the lock function for a preset time according to user settings or user request. Hence, the user need not perform an unnecessary unlock operation. In addition, the lock function is deactivated for a given time. In the case that the mobile terminal 100 is lost or remains at a specific position for a long time, the lock function is automatically activated, contributing to information security.

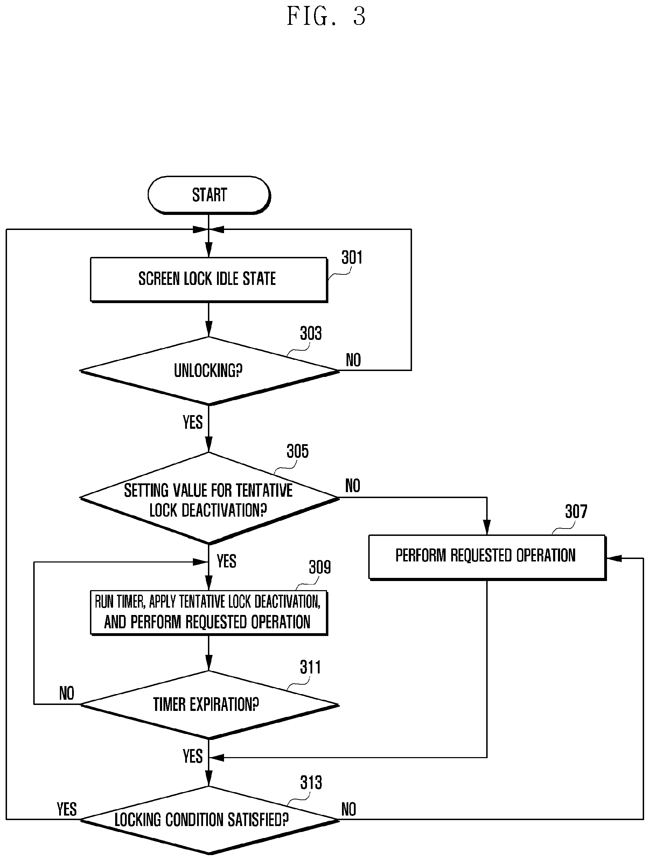

FIG. 3 illustrates a flowchart of a lock function operation method according to embodiments of the present disclosure.

Referring to FIG. 3, in the lock function operation method, the control unit 160 of the mobile terminal 100 outputs a lock screen on the display unit 140 and remains in a wait state (301). That is, the user may configure settings for lock activation in advance. Thereafter, the user may turn on the mobile terminal 100 or manipulate the mobile terminal 100 so that a locking condition is satisfied. While the lock function is activated, the user may manipulate the mobile terminal 100. For example, the user may press a "home" key or "power" key of the mobile terminal 100.

The lock screen output on the display unit 140 at step 301 may be a lock screen having a preset pattern or a PIN entry region. Hence, the user may enter a specific pattern or a PIN code through the lock screen. The control unit 160 checks whether the input information matches the preset unlock key 153 (303). Here, the unlock key 153 may be a preset pattern or PIN code. When the input information does not match the preset unlock key 153, the control unit 160 returns to step 301.

When the input information matches the preset unlock key 153, the control unit 160 checks whether a setting value for tentative lock deactivation is input (305). Here, the control unit 160 may control the display unit 140 to output a screen for setting tentative lock deactivation. For example, the control unit 160 may display a lock screen having a value entry region on the display unit 140. When an input value does not match the preset setting key 155, the control unit 160 may deactivate the lock function and perform a requested operation (307). That is, the control unit 160 does not apply tentative lock deactivation and may perform an operation according to user manipulation. For example, the control unit 160 may perform an operation such as file playback, file search, call handling, web access, broadcast reception, or camera manipulation according to user control or preset scheduling information.

When an input value matches the preset setting key 155, the control unit 160 starts the timer 163, applies tentative lock deactivation, and performs an operation according to user control or preset scheduling information (309). Here, the control unit 160 may apply tentative lock deactivation in different ways according to properties of the setting key 155. For example, in the case that the setting key 155 has a property similar to the unlock key 153 (the setting key 155 is used for tentative lock deactivation), when input information matches the setting key 155, the control unit 160 may apply tentative lock deactivation for a preset time. While tentative lock deactivation is applied, although the power saving mode is entered, the control unit 160 may not display a lock screen for locking.

In the case that the setting key 155 is used not only for tentative lock deactivation but also as a time value specifying a duration in which tentative lock deactivation is effective, the control unit 160 may apply tentative lock deactivation according to input information. For example, when no input is received after the input signal matching the unlock key 153 is received, the control unit 160 may proceed to step 307 (tentative lock deactivation is not applied). When a new input signal is received after the input signal matching the unlock key 153 is received, the control unit 160 may apply tentative lock deactivation for a time indicated by the new input signal. For example, when the user enters a PIN code matching the unlock key 153 and enters a value '2' in sequence, the control unit 160 may regard the input value '2' as an input signal for tentative lock deactivation and as a time value (two hours) for the timer 163. That is, tentative lock deactivation will be applied for two hours.

The control unit 160 checks whether the timer 163 has expired (311). When the timer 163 has not expired, the control unit 160 returns to step 309 and performs a requested operation while tentative lock deactivation is being applied. When the timer 163 has expired, the control unit 160 checks whether a locking condition is satisfied (313). When no locking condition is satisfied, the control unit 160 proceeds to step 307, and may perform a requested operation and monitor the locking conditions. Here, a locking condition may correspond to absence of input for a preset time or more, or to generation of an input signal requesting lock activation. When a locking condition is satisfied, the control unit 160 activates the lock function and returns to step 301.

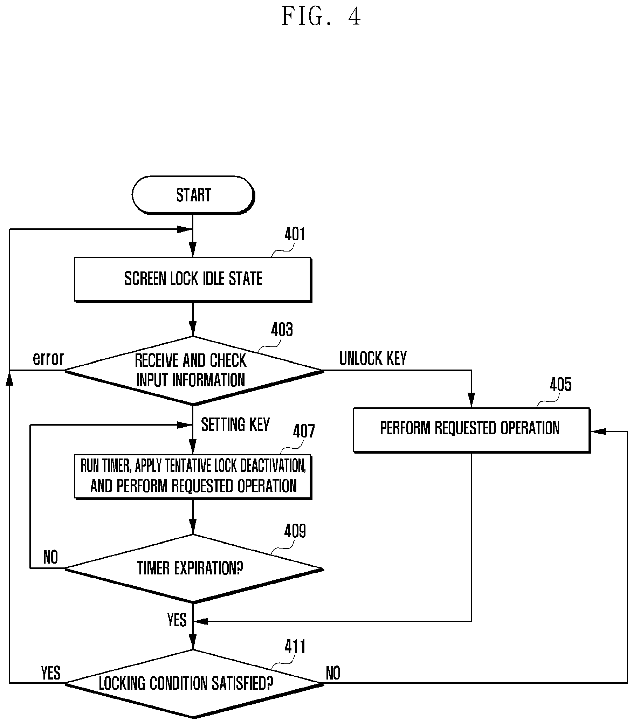

FIG. 4 illustrates a flowchart of a lock function operation method according to embodiments of the present disclosure.

Referring to FIG. 4, in the lock function operation method, the control unit 160 of the mobile terminal 100 outputs a lock screen on the display unit 140 and remains in a wait state (401). Here, the lock screen enables entry of unlock information.

The control unit 160 receives input information through the input unit 120 or display unit 140 and checks the input information (403). When the input information does not match the unlock key 153 or setting key 155 (erroneous case), the control unit 160 returns to step 401. When the input information matches the preset unlock key 153, the control unit 160 may deactivate the lock function and perform an operation according to user control or preset scheduling information (405).

When the input information matches the preset setting key 155, the control unit 160 starts the timer 163, applies tentative lock deactivation, and performs an operation according to user control or preset scheduling information (407).

The control unit 160 checks whether the timer 163 has expired (409). When the timer 163 has not expired, the control unit 160 returns to step 407 and performs a requested operation while tentative lock deactivation is being applied. When the timer 163 has expired, the control unit 160 checks whether a locking condition is satisfied (411). When no locking condition is satisfied, the control unit 160 proceeds to step 405, and may perform a requested operation and monitor satisfaction of a locking condition. When a locking condition is satisfied, the control unit 160 activates the lock function and returns to step 401.

As described above, when a lock screen is output on the display unit 140, the mobile terminal 100 may perform unlocking or may perform unlocking and apply tentative lock deactivation according to input information. To this end, the user may configure settings for the unlock key 153 (for unlocking) and the setting key 155 (for unlocking, tentative lock deactivation and deactivation time).

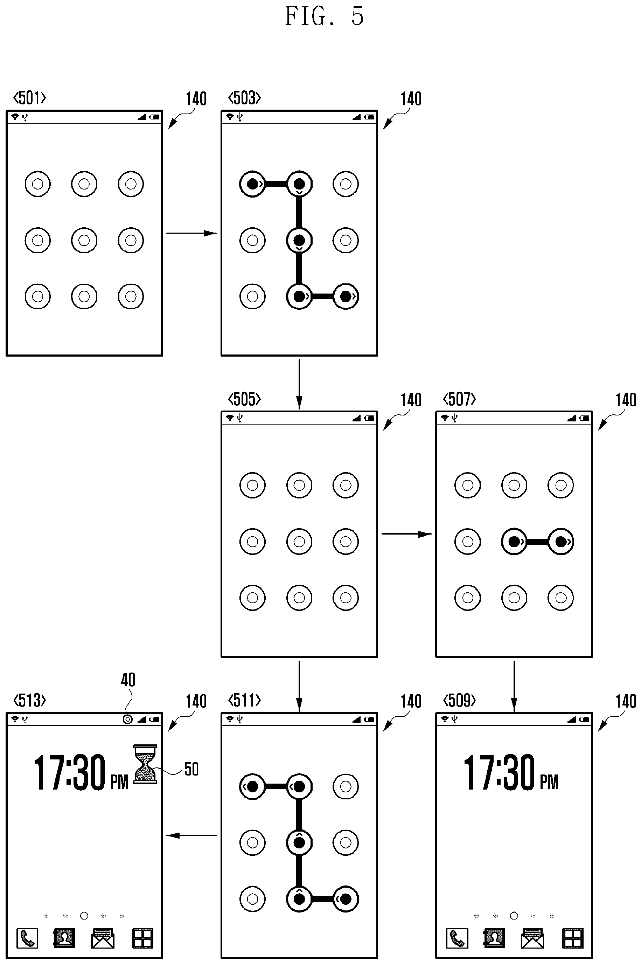

FIG. 5 illustrates screen representations for a first example of lock function operation according to embodiments of the present disclosure.

Referring to FIG. 5, to manipulate the mobile terminal 100 whose lock function is activated, the user may generate an input signal by entering, for example, a "home" key. Then, the control unit 160 may control the display unit 140 to output a lock screen indicating lock activation as indicated by reference numeral 501. Here, the lock screen may include a pattern according to user lock settings. For entry of a specific pattern, the lock screen is depicted as having nine points as a pattern. However, the present disclosure is not limited thereto. The display unit 140 may output a lock screen with a variety of patterns according to user selection.

The user may generate an input signal matching the preset unlock key 153 through the input unit 120 or display unit 140 as indicated by reference numeral 503. When the input information matches the unlock key 153, the control unit 160 may deactivate the lock function and output a lock screen having a pattern for tentative lock deactivation as indicated by reference numeral 505. That is, the lock screen having the pattern indicated by reference numeral 505 serves to determine whether to apply tentative lock deactivation. When the user enters a pattern not matching the preset setting key 155 as indicated by reference numeral 507, the control unit 160 does not apply tentative lock deactivation and may perform a user requested operation with the lock deactivated as indicated by reference numeral 509.

In a state indicated by reference numeral 505, when the user enters a pattern matching the preset setting key 155 as indicated by reference numeral 511, the control unit 160 may apply tentative lock deactivation as indicated by reference numeral 513. Here, to indicate application of tentative lock deactivation, one or more of an unlock indicator 40 and an unlock icon 50 may be output on the display unit 140. The unlock icon 50 may have a different shape or image according to the tentative lock deactivation time. The user may check the unlock icon 50 to identify a duration of tentative lock deactivation.

In addition, the user may select the unlock icon 50 to increase the tentative lock deactivation time or to cancel tentative lock deactivation. To this end, the control unit 160 may output a screen enabling adjustment of the tentative lock deactivation time on the display unit 140.

In FIG. 5, the unlock key 153 and the setting key 155 have been described as having the same pattern. However, the present disclosure is not limited thereto. That is, the unlock key 153 and the setting key 155 may have the same pattern or different patterns according to user settings. The screen indicated by reference numeral 505 may be a screen enabling entry of a number specifying a tentative deactivation time.

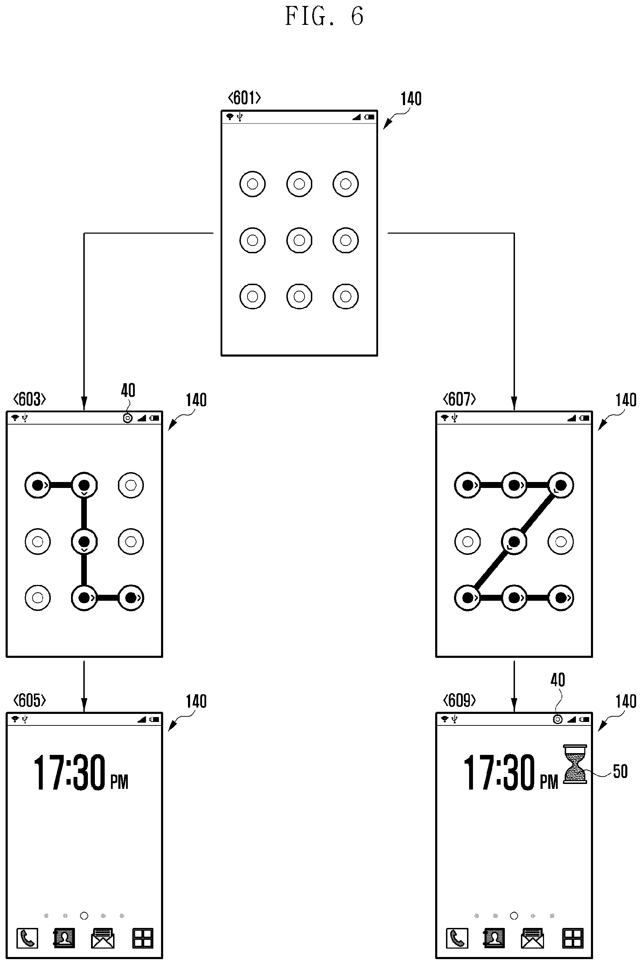

FIG. 6 illustrates screen representations for a second example of lock function operation according to embodiments of the present disclosure.

Referring to FIG. 6, the control unit 160 of the mobile terminal 100 may control the display unit 140 to output a lock screen as indicated by reference numeral 601 (similar to the state indicated by reference numeral 501). When the user enters input information, the control unit 160 may perform different operations according to the input information. That is, when a pattern entered by the user matches the unlock key 153 as indicated by reference numeral 603, the control unit 160 may deactivate the lock function. As indicated by reference numeral 605, the control unit 160 may control the display unit 140 to output a screen as a result of deactivation of the lock function. Here, the screen indicated by reference numeral 605 may be a screen associated with an application executed before activation of the lock function.

When a pattern entered by the user matches the setting key 155 as indicated by reference numeral 607, the control unit 160 may deactivate the lock function and apply tentative lock deactivation. As indicated by reference numeral 609, the control unit 160 may output a screen on the display unit 140 as a result of deactivation of the lock function and present an indication to application of tentative lock deactivation. One or more of an unlock indicator 40 and an unlock icon 50 may be output on the display unit 140. Here, to indicate application of tentative lock deactivation, the display unit 140 is described as outputting the unlock indicator 40 and the unlock icon 50. However, the present disclosure is not limited thereto. That is, when input information entered by the user matches the setting key 155, the control unit 160 may output a notification or popup window indicating application of tentative lock deactivation for a preset time. Here, the tentative deactivation time may also be output for a preset time.

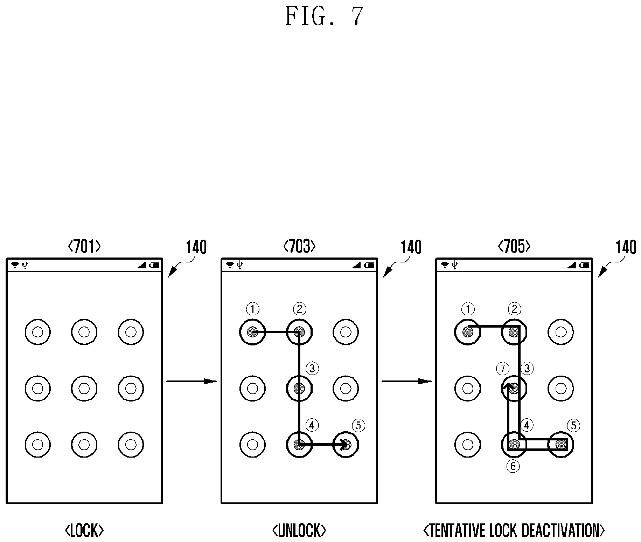

FIG. 7 illustrates screen representations for a third example of lock function operation according to embodiments of the present disclosure.

Referring to FIG. 7, with activation of the lock function, the control unit 160 may output a lock screen having a pattern on the display unit 140 as indicated by reference numeral 701. Here, the display unit 140 displays a lock screen having nine points as a pattern.

The user may enter a pattern matching the preset unlock key 153 as indicated by reference numeral 703. Specifically, the user may enter a specific pattern by making a drag gesture involving first point (upper left), second point (upper center), third point (center), fourth point (lower center) and fifth point (lower right) in sequence. The touch panel 143 generates a drag event involving first to fifth points and sends the drag event to the control unit 160. Upon reception of the drag event, the control unit 160 checks whether the drag event matches the unlock key 153. When the drag event matches the unlock key 153, the control unit 160 may control an operation to deactivate the lock function (unlock). Here, the control unit 160 may check occurrence of an end-of-drag event (i.e. touch release). When an end-of-drag event occurs, the control unit 160 may regard this as completion of the drag gesture and perform the unlock operation.

In a state indicated by reference numeral 703, the user may make an additional touch gesture. For example, the user may enter a drag gesture involving fifth point, fourth point and third point in sequence as indicated by reference numeral 705. In the case that an additional touch event occurs continuously or discontinuously after occurrence of a touch event matching the unlock key 153, the control unit 160 may regard the additional touch event as an input signal corresponding to the setting key 155. When one point corresponds to one hour, the control unit 160 may set the tentative lock deactivation time to two hours according to the additional touch event involving two points (fourth point and third point). Here, the time per point may be set by the user or preset by the developer.

The user may generate a touch event by making a touch gesture involving touch-down, drag and touch-release. For example, as indicated by reference numeral 705, the user may generate a touch event by making a drag gesture from first point to fifth point and back from fifth point to third point as a single action. Then, the control unit 160 checks whether the touch event carries touch information matching the unlock key 153 and additional touch information. When the touch event carries touch information matching the unlock key 153, the control unit 160 may deactivate the lock function. When the touch event carries both touch information matching the unlock key 153 and additional touch information, the control unit 160 may deactivate the lock function, apply tentative lock deactivation, and run the timer 163 for a time corresponding to the additional touch information.

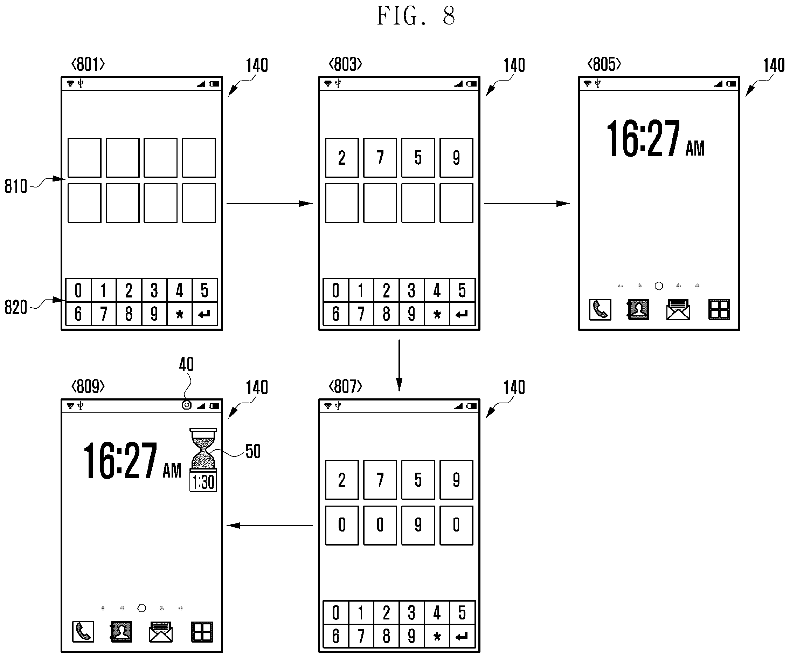

FIG. 8 illustrates screen representations for a fourth example of lock function operation according to embodiments of the present disclosure.

Referring to FIG. 8, with activation of the lock function, the control unit 160 may output a lock screen enabling PIN code entry on the display unit 140 as indicated by reference numeral 801. Here, the lock screen is depicted as including a number output region 810 accommodating 8 digits and a number entry region 820. However, the present disclosure is not limited thereto. That is, the number output region 810 may be set to accommodate more than 8 digits with or without separation between digits according to user settings.

The user may enter a PIN code using the number entry region 820 and the control unit 160 may display the PIN code in the number output region 810 as indicated by reference numeral 803. Here, the control unit 160 may replace the entered number with special characters for security purposes. When a PIN code is entered, the control unit 160 may check whether the input PIN code matches the preset unlock key 153. For example, when "2759" is entered as a PIN code, the control unit 160 may check whether "2759" matches the unlock key 153. In particular, when the user enters the 'OK' or 'enter' key to finish key entry after inputting a PIN code (e.g. "2759") matching the unlock key 153, the control unit 160 may deactivate the lock function (unlocking) as indicated by reference numeral 805. Here, the control unit 160 may control the display unit 140 to output a screen according to preset scheduling information or a screen associated with an application executed before activation of the lock function.

As indicated by reference numeral 807, the user may enter a number in addition to the PIN code. For example, the user may enter "0090" in addition to "2759". When the user enters the 'enter' key or the like to complete key entry, the control unit 160 may check whether the input information contains data matching the unlock key 153 and additional data. When additional data is present, the control unit 160 may regard the additional data as a signal for tentative lock deactivation. Hence, the control unit 160 may deactivate the lock function and notify the user of application of tentative lock deactivation as indicated by reference numeral 809. Here, to notify application of tentative lock deactivation, the control unit 160 outputs an unlock indicator 40 and an unlock icon 50 on the display unit 140. Alternatively, as described before, the control unit 160 may output a notification or popup window indicating application of tentative lock deactivation for a preset time.

As described above, the mobile terminal supporting lock function operation of the present disclosure may apply tentative lock deactivation so as to deactivate a process realizing the lock function for a time given by default or set by the user. Hence, embodiments of the present disclosure may alleviate user inconvenience due to repeated unlocking and sustain security by activating the lock function after a given time. This improves user operability with regard to the lock function. In addition, the mobile terminal may provide a separate menu for setting options for tentative lock deactivation, so that tentative lock deactivation may be applied according to user settings without regard to the time of unlocking. To this end, the mobile terminal may provide a menu having options for selecting the tentative deactivation time such as one hour, two hours or user specified time, tentatively deactivate the lock function according to user selection, and activate the lock function after expiration of the timer to perform normal locking operation. Hence, the user may tentatively deactivate the lock function through menu selection if needed during usage of the mobile terminal.

If necessary, the mobile terminal 100 may further include various components. That is, the mobile terminal 100 serving as a communication device may further include a local-area communication module for local area communication, a data communication interface based on wired and wireless communication, an Internet communication module for Internet access, and a digital broadcast reception module for playing digital broadcasts. With the digital convergence trend, it should be apparent to those skilled in the art that the mobile terminal 100 may further include a unit comparable to the above-described units, and one unit of the mobile terminal 100 may be removed or replaced with another unit.

The mobile terminal 100 of the present disclosure may be any information and communication appliance or multimedia appliance, such as a mobile communication terminal based on communication protocols supporting various communication systems, a portable multimedia player (PMP), a digital broadcast receiver, a personal digital assistant (PDA), a music player like an MP3 player, a portable game console, a smartphone, a laptop computer, or a handheld computer.

In a feature of the present disclosure, the lock function operation method enables the mobile terminal to delay or adjust the point in time at which the lock function is activated according to user settings without increased security risk. Hence, the user may operate the mobile terminal in a more convenient manner without repeated lock manipulation.

Hereinabove, exemplary embodiments of the present disclosure have been described with reference to the accompanying drawings. Specific terms or words used in the description should be construed in accordance with embodiments of the present invention, without limiting the scope of the present invention. It should be understood that many variations and modifications of the embodiments described herein will still fall within the scope of the present invention, as defined in the appended claims.

## Claims

1. A method for operation of a lock function in a mobile terminal, comprising:
receiving (303) an input event in a locked state; and
performing (309) an unlock operation by deactivating the lock function and applying (309) tentative lock deactivation for a given time, according to the received input event;
wherein the received input event comprises an indication of the given time in which tentative lock deactivation is applied; and
wherein the given time in which tentative lock deactivation is applied is specified by a user when generating the input event in the locked state.

2. The method of claim 1, wherein receiving (303) an input event comprises one of:
receiving an input event corresponding to an unlock key (153) that is a preset unlock key for unlocking; and
receiving an input event having input information corresponding to the unlock key (153) and additional input information.

3. The method of claim 2, wherein performing (309) an unlock operation comprises deactivating (309) the lock function and applying tentative lock deactivation, when the received input event includes additional input information.

4. The method of claim 2, wherein the additional input information is one of: input information matching the unlock key (153), input information matching a reverse of a part of the unlock key (153), information that is one of continuously and discontinuously input after information matching the unlock key (153), and setting information for a time during which tentative lock deactivation is applied.

5. The method of claim 1, wherein receiving (303) an input event comprises one of:
receiving an input event corresponding to an unlock key (153) for unlocking; and
receiving an input event corresponding to a setting key (505) for unlocking and tentative lock deactivation.

6. The method of claim 1, wherein the input event has one or more of: input information to remove a lock screen using a pattern, and input information to remove a lock screen using a PIN code.

7. The method of claim 1, further comprising one or more of:
canceling, in response to reception of an input event for canceling tentative lock deactivation while tentative lock deactivation is applied, application of tentative lock deactivation and activating the lock function according to satisfaction of a locking condition; and
adjusting, in response to reception of an input event for adjusting a tentative lock deactivation time while tentative lock deactivation is applied, the tentative lock deactivation time.

8. The method of claim 1, further comprising outputting, when tentative lock deactivation is applied, one or more of: an unlock indicator (50), an unlock icon (50), an unlock message and an unlock popup to notify application of tentative lock deactivation.

9. A mobile terminal (100) supporting operation of a lock function, comprising:
an input device (120) configured to generate (303) an input in response to receiving a user input; and
a control unit (160) configured to control (309) an operation to deactivate the lock function and apply (309) tentative lock deactivation for a given time, according to a received input event;
wherein the input event comprises an indication of the given time in which tentative lock deactivation is applied; and
wherein a user specifies the given time in which tentative lock deactivation is applied when generating the input event.

10. The mobile terminal (100) of claim 9, wherein the input device (120) is further configured to generate one of:
an input event corresponding to an unlock key (153) that is a preset unlock key for unlocking; and
an input event having input information corresponding to the unlock key (153) and additional input information;
wherein, when the received input event has additional input information, the control unit (160) controls an operation to deactivate the lock function and apply tentative lock deactivation.

11. The mobile terminal (100) of claim 10, wherein the additional input information is one of: input information matching the unlock key (153), input information matching a reverse of a part of the unlock key (153), information that is one of continuously and discontinuously input after information matching the unlock key (153) is received, and setting information for a time during which tentative lock deactivation is applied.

12. The mobile terminal (100) of claim 9, wherein the input device (120) is further configured to generate one of:
an input event corresponding to an unlock key (153) for unlocking; and
an input event corresponding to a setting key (155) for unlocking and tentative lock deactivation.

13. The mobile terminal (100) of claim 9, wherein, in response to reception of an input event for canceling tentative lock deactivation while tentative lock deactivation is applied, the control unit (160) is further arranged to control an operation to cancel application of tentative lock deactivation and to activate the lock function according to satisfaction of a locking condition.

14. The mobile terminal (100) of claim 9, wherein, in response to reception of an input event for adjusting a tentative lock deactivation time while tentative lock deactivation is applied, the control unit (160) is further arranged to control an operation to adjust a time value of a timer for application of tentative lock deactivation.

15. The mobile terminal (100) of claim 9, further comprising:
a display unit (140);
wherein, when tentative lock deactivation is applied, the display unit (140) is further arranged to output one or more of: an unlock indicator (50), an unlock icon (50), an unlock message and an unlock popup to notify application of tentative lock deactivation.

## Patentansprüche

1. Verfahren zur Bedienung einer Sperrfunktion in einem mobilen Endgerät, aufweisend:
ein Empfangen (303) eines Eingangsereignisses in einem gesperrten Zustand; und ein Ausführen (309) eines Entsperrvorgangs durch Deaktivieren der Sperrfunktion und ein Anwenden (309) einer vorläufigen Sperrendeaktivierung für einen bestimmten Zeitraum, der dem empfangenen Eingangsereignis entspricht;
wobei das empfangene Eingangsereignis eine Angabe des bestimmten Zeitraums aufweist, in dem eine vorläufige Sperrendeaktivierung angewendet wird; und
wobei der bestimmte Zeitraum, in dem eine vorläufige Sperrendeaktivierung angewendet wird, durch einen Benutzer beim Generieren des Eingangsereignisses in dem gesperrten Zustand angegeben wird.

2. Verfahren nach Anspruch 1, wobei das Empfangen (303) eines Eingangsereignisses eines aufweist von:
einem Empfangen eines Eingangsereignisses, das einem Entsperrschlüssel (153) entspricht, der ein voreingestellter Entsperrschlüssel zum Entsperren ist; und
einem Empfangen eines Eingangsereignisses mit Eingabeinformationen, die dem Entsperrschlüssel (153) entsprechen, und weiteren Eingabeinformationen.

3. Verfahren nach Anspruch 2, wobei das Ausführen (309) eines Entsperrvorgangs ein Deaktivieren (309) der Sperrfunktion und ein Anwenden einer vorläufigen Sperrendeaktivierung aufweist, wenn das empfangene Eingangsereignis zusätzliche Eingabeinformationen enthält.

4. Verfahren nach Anspruch 2, wobei die zusätzlichen Eingabeinformationen eines sind von: Eingabeinformationen, die dem Entsperrschlüssel (153) entsprechen, Eingabeinformationen, die einem Gegenteil eines Teils des Entsperrschlüssels (153) entsprechen, Informationen, die entweder eine kontinuierliche oder diskontinuierliche Eingabe nach Informationen sind, die dem Entsperrschlüssel (153) entsprechen, und Einstellinformationen für eine Zeit, währen der die vorläufige Sperrendeaktivierung angewendet wird.

5. Verfahren nach Anspruch 1, wobei das Empfangen (303) eines Eingangsereignisses eines aufweist von:
einem Empfangen eines Eingangsereignisses, das einem Entsperrschlüssel (153) zum Entsperren entspricht; und
einem Empfangen eines Eingangsereignisses, das einem Einstellschlüssel (505) zum Entsperren und zur vorläufigen Sperrendeaktivierung entspricht.

6. Verfahren nach Anspruch 1, wobei das Eingangsereignis eines oder mehreres aufweist von: Eingabeinformationen zum Entfernen eines Sperrbildschirms unter Verwendung eines Musters, und Eingabeinformationen zum Entfernen eines Sperrbildschirms unter Verwendung eines PIN-Codes.

7. Verfahren nach Anspruch 1, ferner aufweisend eines oder mehreres von:
in Reaktion auf einen Empfang eines Eingangsereignisses zum Abbrechen einer vorläufigen Sperrendeaktivierung während eines Anwendens der vorläufigen Sperrendeaktivierung, einem Abbrechen der Anwendung der vorläufigen Sperrendeaktivierung und einem Aktivieren der Sperrfunktion entsprechend einer Erfüllung einer Sperrbedingung; und
in Reaktion auf einen Empfang eines Eingangsereignisses zum Anpassen einer vorläufigen Sperrendeaktivierungszeit während eines Anwendens der vorläufigen Sperrendeaktivierung, einem Anpassen der vorläufigen Sperrendeaktivierungszeit.

8. Verfahren nach Anspruch 1, ferner aufweisend, wenn eine vorläufige Sperrendeaktivierung angewendet wird, Ausgeben von einem oder mehreres von: einem Entsperrindikator (50), einem Entsperrsymbol (50), einer Entsperrmeldung und eines Entsperr-Popups zum Benachrichtigen über die Anwendung einer vorläufigen Sperrendeaktivierung.

9. Mobiles Endgerät (100), das eine Bedienung einer Sperrfunktion unterstützt, aufweisend:
eine Eingabevorrichtung (120), die konfiguriert ist, um eine Eingabe in Reaktion auf ein Empfangen einer Benutzereingabe zu generieren (303); und
eine Steuereinheit (160), die konfiguriert ist, um eine Bedienung (309) zum Deaktivieren der Sperrfunktion und zum Anwenden (309) einer vorläufigen Sperrendeaktivierung für einen bestimmten Zeitraum zu steuern, der einem empfangenen Eingangsereignis entspricht;
wobei das Eingangsereignis eine Angabe des bestimmten Zeitraums aufweist, in dem eine vorläufige Sperrendeaktivierung angewendet wird; und
wobei ein Benutzer beim Generieren des Eingangsereignisses den bestimmten Zeitraum angibt, in dem eine vorläufige Sperrendeaktivierung angewendet wird.

10. Mobiles Endgerät (100) nach Anspruch 9, wobei die Eingabevorrichtung (120) ferner konfiguriert ist, um eines zu generieren von:
einem Eingangsereignis, das einem Entsperrschlüssel (153) entspricht, der ein voreingestellter Entsperrschlüssel zum Entsperren ist; und
einem Eingangsereignis mit Eingabeinformationen, die dem Entsperrschlüssel (153) entsprechen, und weiteren Eingabeinformationen;
wobei, wenn das empfangene Eingangsereignis weitere Eingabeinformationen aufweist, die Steuereinheit (160) einen Vorgang zum Deaktivieren der Sperrfunktion und Anwenden einer vorläufigen Sperrendeaktivierung steuert.

11. Mobiles Endgerät (100) nach Anspruch 10, wobei die zusätzlichen Eingabeinformationen eines sind von: Eingabeinformationen, die dem Entsperrschlüssel (153) entsprechen, Eingabeinformationen, die einem Gegenteil eines Teils des Entsperrschlüssels (153) entsprechen, Informationen, die entweder eine kontinuierliche oder diskontinuierliche Eingabe nach Informationen sind, die dem Entsperrschlüssel (153) entsprechen, und Einstellinformationen für eine Zeit, währen der die vorläufige Sperrendeaktivierung angewendet wird.

12. Mobiles Endgerät (100) nach Anspruch 9, wobei die Eingabevorrichtung (120) ferner konfiguriert ist, um eines zu generieren von:
einem Eingangsereignis, das einem Entsperrschlüssel (153) zum Entsperren beim Generieren des Eingangsereignisses zum Entsperren entspricht; und einem Eingangsereignis, das einem Einstellschlüssel (155) zum Entsperren und zur vorläufigen Sperrendeaktivierung entspricht.

13. Mobiles Endgerät (100) nach Anspruch 9, wobei in Reaktion auf einen Empfang eines Eingangsereignisses zum Abbrechen einer vorläufigen Sperrendeaktivierung während eines Anwendens der vorläufigen Sperrendeaktivierung die Steuereinheit (160) ferner angeordnet ist, um einen Vorgang zum Abbrechen der Anwendung der vorläufigen Sperrendeaktivierung und zum Aktivieren der Sperrfunktion entsprechend einer Erfüllung einer Sperrbedingung zu steuern.

14. Mobiles Endgerät (100) nach Anspruch 9, wobei in Reaktion auf einen Empfang eines Eingangsereignisses zum Anpassen der vorläufigen Sperrendeaktivierungszeit während eines Anwendens der vorläufigen Sperrendeaktivierung die Steuereinheit (160) ferner angeordnet ist, um einen Vorgang zum Anpassen eines Zeitwerts eines Zeitgebers für die Anwendung der vorläufigen Sperrendeaktivierung zu steuern.

15. Mobiles Endgerät (100) nach Anspruch 9, ferner aufweisend eine Anzeigeeinheit (140); wobei, wenn eine vorläufige Sperrendeaktivierung angewendet wird, die Anzeigeeinheit (140) ferner angeordnet ist, um eines oder mehreres auszugeben von:
einem Entsperrindikator (50), einem Entsperrsymbol (50), einer Entsperrmeldung und eines Entsperr-Popups zum Benachrichtigen über die Anwendung einer vorläufigen Sperrendeaktivierung.

## Revendications

1. Procédé permettant l'actionnement d'une fonction de verrouillage dans un terminal mobile, comprenant :
la réception (303) d'un événement d'entrée dans un état verrouillé ; et
la réalisation (309) d'une opération de déverrouillage en désactivant la fonction de verrouillage et en appliquant (309) une désactivation de verrouillage provisoire pendant un temps donné, selon l'événement d'entrée reçu ;
ledit événement d'entrée reçu comprenant une indication du temps donné pendant lequel une désactivation de verrouillage provisoire est appliquée ; et
ledit temps donné pendant lequel une désactivation de verrouillage provisoire est appliquée étant précisé par un utilisateur lors de la génération de l'événement d'entrée dans l'état verrouillé.

2. Procédé selon la revendication 1, ladite réception (303) d'un événement d'entrée comprenant l'une parmi :
la réception d'un événement d'entrée correspondant à une clé de déverrouillage (153) qui est une clé de déverrouillage prédéfinie pour le déverrouillage ; et
la réception d'un événement d'entrée contenant des informations d'entrée correspondant à la clé de déverrouillage (153) et des informations d'entrée supplémentaires.

3. Procédé selon la revendication 2, ladite réalisation (309) d'une opération de déverrouillage comprenant la désactivation (309) de la fonction de verrouillage et l'application d'une désactivation de verrouillage provisoire, lorsque l'événement d'entrée reçu comprend des informations d'entrée supplémentaires.

4. Procédé selon la revendication 2, lesdites informations d'entrée supplémentaires étant les unes parmi : des informations d'entrée correspondant à la clé de déverrouillage (153), des informations d'entrée correspondant à l'inverse d'une partie de la clé de déverrouillage (153), des informations qui sont l'une d'une entrée en continu et d'une entrée en discontinu après réception d'informations correspondant à la clé de déverrouillage (153), et des informations de configuration pendant un temps durant lequel une désactivation de verrouillage provisoire est appliquée.

5. Procédé selon la revendication 1, la réception (303) d'un événement d'entrée comprenant l'une parmi:
la réception d'un événement d'entrée correspondant à une clé de déverrouillage (153) pour le déverrouillage ; et
la réception d'un événement d'entrée correspondant à une clé de configuration (505) pour le déverrouillage et une désactivation de verrouillage provisoire.

6. Procédé selon la revendication 1, ledit événement d'entrée comprenant les unes ou plusieurs parmi : des informations d'entrée pour supprimer un écran de verrouillage à l'aide d'un modèle, et des informations d'entrée pour supprimer un écran de verrouillage à l'aide d'un code PIN.

7. Procédé selon la revendication 1, comprenant en outre une ou plusieurs opérations parmi :
l'annulation, en réponse à la réception d'un événement d'entrée pour annuler une désactivation de verrouillage provisoire alors qu'une désactivation de verrouillage provisoire est appliquée, de l'application d'une désactivation de verrouillage provisoire et l'activation de la fonction de verrouillage selon la satisfaction d'un état de verrouillage ; et
le réglage, en réponse à la réception d'un événement d'entrée pour régler un temps de désactivation de verrouillage provisoire alors qu'une désactivation de verrouillage provisoire est appliquée, du temps de désactivation de verrouillage provisoire.

8. Procédé selon la revendication 1, comprenant en outre l'émission, lorsqu'une désactivation de verrouillage provisoire est appliquée, d'un ou plusieurs éléments parmi : un indicateur de déverrouillage (50), une icône de déverrouillage (50), un message de déverrouillage et une fenêtre contextuelle de déverrouillage pour signaler l'application d'une désactivation de verrouillage provisoire.

9. Terminal mobile (100) soutenant l'actionnement d'une fonction de verrouillage, comprenant :
un dispositif d'entrée (120) conçu pour générer (303) une entrée en réponse à la réception d'une entrée utilisateur ; et
une unité de commande (160) conçue pour commander (309) une opération pour désactiver la fonction de verrouillage et appliquer (309) une désactivation de verrouillage provisoire pendant un temps donné, selon un événement de d'entrée reçu ;
ledit événement d'entrée comprenant une indication du temps donné pendant lequel une désactivation de verrouillage provisoire est appliquée ; et
un utilisateur précisant le temps donné pendant lequel une désactivation de verrouillage provisoire est appliquée lors de la génération de l'événement d'entrée.

10. Terminal mobile (100) selon la revendication 9, ledit dispositif d'entrée (120) étant en outre conçu pour générer l'un parmi :
un événement d'entrée correspondant à une clé de déverrouillage (153) qui est une clé de déverrouillage prédéfinie pour le déverrouillage ; et
un événement d'entrée contenant des informations d'entrée correspondant à la clé de déverrouillage (153) et à des informations d'entrée supplémentaires ;
lorsque l'événement d'entrée reçu contient des informations d'entrée supplémentaires, l'unité de commande (160) commandant une opération pour désactiver la fonction de verrouillage et appliquer une désactivation de verrouillage provisoire

11. Terminal mobile (100) selon la revendication 10, lesdites informations d'entrée supplémentaires étant les unes parmi : des informations d'entrée correspondant à la clé de déverrouillage (153), des informations d'entrée correspondant à l'inverse d'une partie de la clé de déverrouillage (153), des informations qui sont l'une d'une entrée en continu et d'une entrée en discontinu après réception d'informations correspondant à la clé de déverrouillage (153), et des informations de configuration pendant un temps durant lequel une désactivation de verrouillage provisoire est appliquée.

12. Terminal mobile (100) selon la revendication 9, ledit dispositif d'entrée (120) étant en outre conçu pour générer l'un parmi :
un événement d'entrée correspondant à une clé de déverrouillage (153) pour le déverrouillage ; et
un événement d'entrée correspondant à une clé de configuration (155) pour le déverrouillage et une désactivation de verrouillage provisoire.

13. Terminal mobile (100) selon la revendication 9, en réponse à la réception d'un événement d'entrée pour annuler une désactivation de verrouillage provisoire alors qu'une désactivation de verrouillage provisoire est appliquée, ladite unité de commande (160) étant en outre agencée pour commander une opération pour annuler l'application d'une désactivation de verrouillage provisoire et pour activer la fonction de verrouillage selon la satisfaction d'un état de verrouillage.

14. Terminal mobile (100) selon la revendication 9, en réponse à la réception d'un événement d'entrée pour régler un temps de désactivation de verrouillage provisoire alors qu'une désactivation de verrouillage provisoire est appliquée, ladite unité de commande (160) étant en outre agencée pour commander une opération pour régler une valeur de temps d'un temporisateur pour l'application d'une désactivation de verrouillage provisoire.

15. Terminal mobile (100) selon la revendication 9, comprenant en outre :
une unité d'affichage (140) ;
lorsqu'une désactivation de verrouillage temporaire est appliquée, l'unité d'affichage (140) est en outre agencée pour émettre un ou plusieurs éléments parmi : un indicateur de déverrouillage (50), une icône de déverrouillage (50), un message de déverrouillage et une fenêtre contextuelle de déverrouillage pour signaler l'application d'une désactivation de verrouillage provisoire.
